## Europäisches Patentamt
## European Patent Office
## Office européen des brevets

(11) Numéro de publication: **0 251 959**
**B1**

(12) **FASCICULE DE BREVET EUROPEEN**

(45) Date de publication du fascicule du brevet:
**18.10.89**

(51) Int. Cl.⁴: **B29C 67/22**
// B29K75:00, B29L31:58

(21) Numéro de dépôt: **87440030.2**

(22) Date de dépôt: **21.05.87**

(54) Procédé de fabrication de matelassures moulées en mousse de polyuréthane comportant plusieurs zones de souplesses différentes et matelassures ainsi réalisées.

(30) Priorité: **23.05.86 FR 8607521**

(43) Date de publication de la demande:
**07.01.88 Bulletin 88/1**

(45) Mention de la délivrance du brevet:
**18.10.89 Bulletin 89/42**

(84) Etats contractants désignés:
**AT BE DE ES FR GB IT NL SE**

(56) Documents cités:
**GB-A- 1 244 284
US-A- 3 393 258
US-A- 3 918 863**

**PATENT ABSTRACTS OF JAPAN,
vol. 7, no. 217 (M-245)[1362], 27th September 1983; &
JP-A-58 112 715 (TOYO GOMU KAGAKU KOGYO
K.K.) 05-07-1983**

(73) Titulaire: **ROTH FRERES S.A., 5 rue Schertz,
F-67100 Strasbourg(FR)**

(72) Inventeur: **Balmisse, Michel, 8 rue de la Rebmatt,
F-67150 Erstein(FR)**
Inventeur: **Molinari, Georges, 33 rue du Languedoc,
F-67150 Erstein(FR)**

(74) Mandataire: **Nuss, Pierre, 10, rue Jacques Kablé,
F-67000 Strasbourg(FR)**

ACTORUM AG

## Description

La présente invention concerne le domaine des pièces moulées en mousse de polyuréthane et a pour objet un procédé de fabrication de matelassures moulées en mousse de polyuréthane comportant plusieurs zones de souplesses différentes voir le JP-A 58 112 715.

Actuellement, il est connu qu'en coulant dans un moule, un mélange d'isocyanate, de polyol, d'activateur, de catalyseur et d'eau, on réalise un mélange moussant qui s'expanse dans le moule et permet d'obtenir, après polymérisation dans ce moule, une matelassure en mousse souple de polyuréthane.

Ce type de matelassure présente une souplesse équivalente en tous ses points, alors, qu'il est souvent souhaitable qu'elle présente, au contraire, différentes zones de souplesse, par exemple une zone souple dans la partie centrale d'un siège, qui correspond à la zone d'assise ou d'appui du dos, et une zone plus ferme dans les parties latérales du siège, qui correspond à une zone de soutien.

On a alors pensé à couler simultanément dans un moule un mélange moussant de qualité souple dans la partie centrale et un mélange moussant de qualité ferme dans les parties latérales, les deux mélanges moussants s'expansant simultanément, de sorte que le coussin obtenu présente une partie centrale souple et des parties latérales fermes.

Mais pour obtenir une bonne délimitation des zones de souplesse, il est indispensable de compartimenter le moule, pour chaque zone de coulée, par des séparations en métal de quelques centimètres de hauteur fixées au fond du moule et destinées à éviter que les mélanges moussants ne se mélangent avant que l'expansion soit suffisamment développée.

Il en résulte que la matelassure, une fois réalisée, présente sur sa surface des fentes moulées indésirables, de l'épaisseur et de la profondeur de ces séparations.

De plus, les zones fermes, si elles sont désirables sur le plan du soutien, n'en sont pas moins désagréables sur le plan du confort d'approche, le procédé de fabrication ne permettant pas que ces parties en mousse ferme soient recouvertes d'une certaine épaisseur de mousse souple.

Enfin, le procédé de fabrication actuel ne permet que de juxtaposer des zones de souplesses différentes, alors qu'il est souvent souhaitable de les superposer.

La présente invention a pour objet de pallier ces inconvénients.

Elle a, en effet, pour objet un procédé de fabrication d'une matelassure moulée en mousse de polyuréthane présentant plusieurs zones juxtaposées et/ou superposées de souplesse différente, caractérisé en ce qu'il consiste à compartimenter un moule en y disposant un ou plusieurs récipients collecteurs et/ou une ou plusieurs séparations en polystyrène expansé, à couler simultanément différents mélanges moussants de polyuréthane de souplesses différentes chacun dans l'un des volumes délimités par les parois des séparations et du moule et/ou par les parois des récipients collecteurs, à recouvrir le moule, à soumettre le moule rempli des mousses de polyuréthane à la température provenant d'une source de chaleur extérieure et/ou de la réaction exothermique des mousses, afin d'obtenir non seulement la polymérisation des mousses de polyuréthane, mais, en outre, la rétraction du polystyrène expansé, cette rétraction à la température déterminant la transformation dudit polystyrène expansé en une couche de matière fine compacte et souple faisant office d'agent qui solidarise entre elles les mousses de polyuréthane de souplesses différentes qui avaient été coulées simultanément.

L'invention sera mieux comprise grâce à la description ci-après qui se rapporte à des modes de réalisation préférés, donnés à titre d'exemples non limitatifs, et expliqués avec référence aux dessins schématiques annexés, dans lesquels :

la figure 1 est une vue en perspective et en coupe d'un moule ouvert, muni de deux récipients collecteurs, lors de la coulée de mélanges de mousse de polyuréthane selon le procédé de fabrication conforme à l'invention ;

la figure 2 est une vue en perspective d'une plaque découpée selon le procédé de fabrication conforme à l'invention ;

la figure 3 est une vue en perspective d'un récipient collecteur réalisé selon le procédé de l'invention;

la figure 4 est une vue en coupe d'une matelassure de siège réalisée selon le procédé de l'invention ;

la figure 5 est une vue en perspective d'un moule ouvert lors de la mise en place d'une plaque de polystyrène expansé, selon une variante du procédé lui conférant la forme d'un récipient collecteur ;

la figure 6 est une vue de face en coupe du moule fermé, selon la ligne A-A de la figure 5, le couvercle du moule étant muni d'un ergot ;

la figure 7 est une vue en coupe d'une telle matelassure de siège ainsi obtenue et accueillant un fessier ;

la figure 8 est une vue en perspective et en coupe d'un moule ouvert muni de deux séparations lors de la coulée de mélanges de mousse de polyuréthane selon le procédé de fabrication conforme à l'invention ;

la figure 9 est une vue en coupe d'une variante de matelassure de siège réalisée selon le procédé de l'invention, et

la figure 10 est une vue en coupe d'une matelassure de dossier réalisée selon le procédé de l'invention.

Conformément à l'invention, le procédé de fabrication consiste à compartimenter un moule 1 en y disposant un ou plusieurs récipients collecteurs 2 et/ou une ou plusieurs séparations 3 en polystyrène expansé, à couler simultanément différents mélanges moussants de polyuréthane de souplesses différentes chacun dans l'un des volumes délimités par les parois des séparations 3 et du moule 1 et/ou par les parois des récipients collecteurs 2, à recouvrir le moule 1, à soumettre le moule 1 rempli des mousses de polyuréthane à la température provenant d'une source de chaleur extérieure et/ou de la réaction exothermique des mousses, afin d'obtenir non seulement la polymérisation des mousses de polyuréthane, mais, en outre, la rétraction du polystyrène expansé, cette rétraction à la température T déterminant la transformation dudit polystyrène expansé en une couche 6 de matière fine compacte et souple faisant office d'agent qui solidarise entre elles les mousses de polyuréthane de souplesses différentes qui avaient été coulées simultanément.

La transformation par rétraction du polystyrène expansé est obtenue en soumettant le moule 1 rempli de mousse de polyuréthane à la température T provenant d'une source de chaleur extérieure et/ou de la réaction exothermique des mousses, de façon à ce que le polystyrène expansé soit soumis à sa température de rétraction comprise entre 80° C et 130° C durant environ 120 à 180 secondes, préférentiellement à 100° C durant 150 secondes.

Selon une caractéristique de l'invention, les séparations 3 et/ou les récipients collecteurs 2 sont façonnés dans des plaques 4 en polystyrène expansé d'une densité de 8 à 20 g/dm³, préférentiellement 15 g/dm³, et d'une épaisseur de 1 à 4 mm, préférentiellement 2 mm et dont la rétraction s'effectue à une température T comprise entre 70° C et 150° C, entraînant pendant la phase de polymérisation la transformation par rétraction dudit polystyrène expansé en une couche 6 de matière fine, compacte et souple faisant office d'agent qui solidarise entre elles les mousses de polyuréthane de souplesses différentes qui avaient été coulées simultanément.

Ainsi le procédé consiste à découper ou à façonner, par exemple sous presse, les plaques 4 en polystyrène expansé, à les disposer à l'intérieur du moule 1 de manière à former des séparations 3 et/ou des récipients collecteurs 2, à les maintenir en place dans le moule 1 par tous moyens connus tels que supports, rainures ou clips, à couler simultanément différents mélanges moussants de polyuréthane de souplesses différentes, chacun dans l'un des volumes délimités par les parois des séparations 3 et du moule 1 et/ou par les parois des récipients collecteurs 2, à recouvrir le moule 1, à soumettre le moule 1 rempli des mousses de polyuréthane à la température provenant d'une source de chaleur extérieure et/ou de la réaction exothermique des mousses, afin d'obtenir non seulement la polymérisation des mousses de polyuréthane, mais, en outre, la rétraction du polystyrène expansé, cette rétraction à la température T déterminant la transformation dudit polystyrène expansé en une couche 6 de matière fine compacte et souple faisant office d'agent qui solidarise entre elles les mousses de polyuréthane de souplesses différentes qui avaient été coulées simultanément.

La solidarisation des mousses de polyuréthane constituant les différentes zones de souplesse peut encore être améliorée en ménagement dans les plaques 4, avant ou après leur découpage, des orifices 5 de l'ordre de 0,5 à 2 mm de diamètre, déterminant les points d'ancrage entre les différentes mousses qui renforcent ainsi leur cohésion.

Selon une autre caractéristique de l'invention, les plaques en polystyrène expansé sont au préalable traitées par surfaçage thermique en les plaçant entre deux plaques métalliques lisses, ou deux rouleaux calandreurs, chauffés à une température t comprise entre 100°C et 140°C, préférentiellement 130°C, durant environ 0,60 à 1,80 secondes, préférentiellement 1,20 secondes, ce surfaçage thermique des plaques au contact des deux plaques ou rouleaux chauffants provoquant, d'une part, un lissage des surfaces supérieure et inférieure de chaque plaque en polystyrène et, d'autre part, une rétraction partielle des billes de polystyrène expansé constitutives de chaque plaque, déterminant ainsi une réduction de la surface des points d'attache des billes entre elles et par là même, une multitude de petits trous là où par suite de la rétraction desdites billes, une désolidarisation partielle s'est opérée.

En outre, et conformément à l'invention, grâce à la rétraction partielle des billes de polystyrène expansées et à leur désolidarisation partielle, l'ensemble de la plaque relativement cassante avant traitement est devenu souple, flexible et par là même posssible à mettre en forme pour constituer des petits récipients collecteurs 2 ou 2'.

Enfin, et conformément à l'invention, le lissage des surfaces de la plaque en polystyrène expansé permet aux mélanges moussants de polyuréthane coulés dans le moule 1 de s'expanser en glissant librement le long des parois des séparations 3 ou récipients collecteurs 2, 2' en polystyrène expansé, ce qui permet l'obtention d'une mousse de polyuréthane parfaitement saine au contact de ces séparations 3 ou récipients collecteurs 2, 2', les bulles d'air parasites, fissures, déchirures étant grâce à cela supprimées.

Dans une première variante de réalisation du procédé, une plaque 4 en mousse de polystyrène est découpée ou façonnée de manière à former deux récipients collecteurs 2 faisant office de séparation (voir figures 2 et 3).

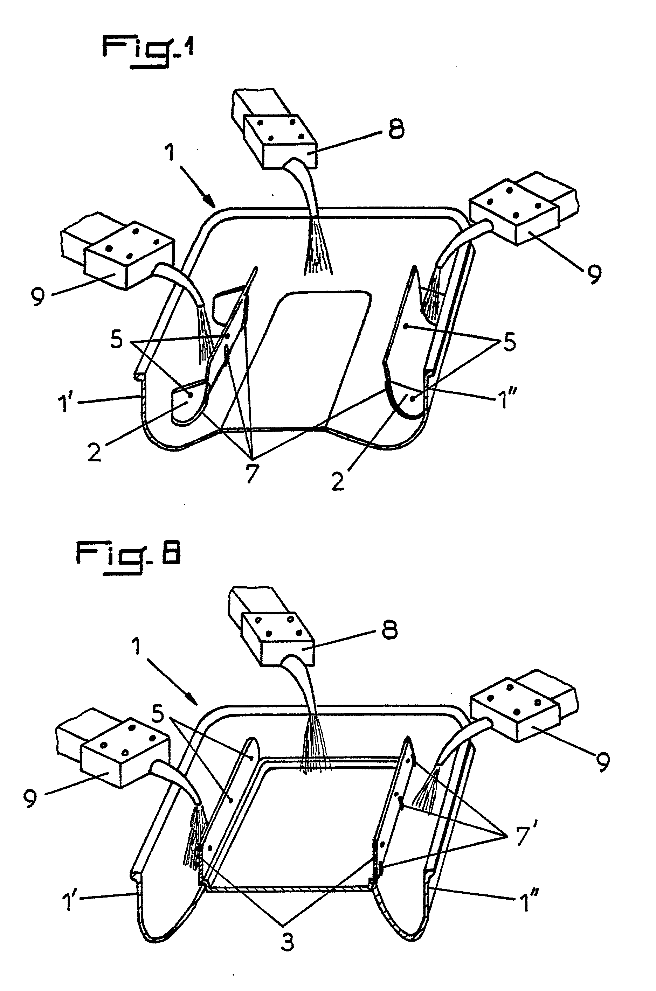

Ces récipients sont ensuite disposés sur les parties latérales 1' et 1" du moule 1 et maintenus en place, par exemple par des supports 7 fixés au moule 1. Deux mélanges moussants de polyuréthane sont alors coulés, une tête de coulée 8 coulant un mélange moussant souple dans la partie centrale du moule 1 et deux têtes de coulée 9 coulant un mélange moussant moins souple dans les récipients collecteurs 2 en mousse de polystyrène (voir figure 1).

Après la coulée de ces différents mélanges moussants, le moule est recouvert d'un couvercle et la mousse et le polystyrène expansé sont amenés à une température d'environ 100° C soit par la seule réaction exothermique de la mousse de polyuréthane elle-même, soit en plaçant, en outre, le moule 1, par exemple dans un four. Durant une période de 150 secondes incluse dans la phase de polymérisation, s'effectue la rétraction partielle des récipients collecteurs 2 en mousse de polystyrène, cette rétraction déterminant la transformation de la mousse de polystyrène en une couche 6 de matière fine et compacte faisant office d'agent qui solidarise les différentes qualités de mousse.

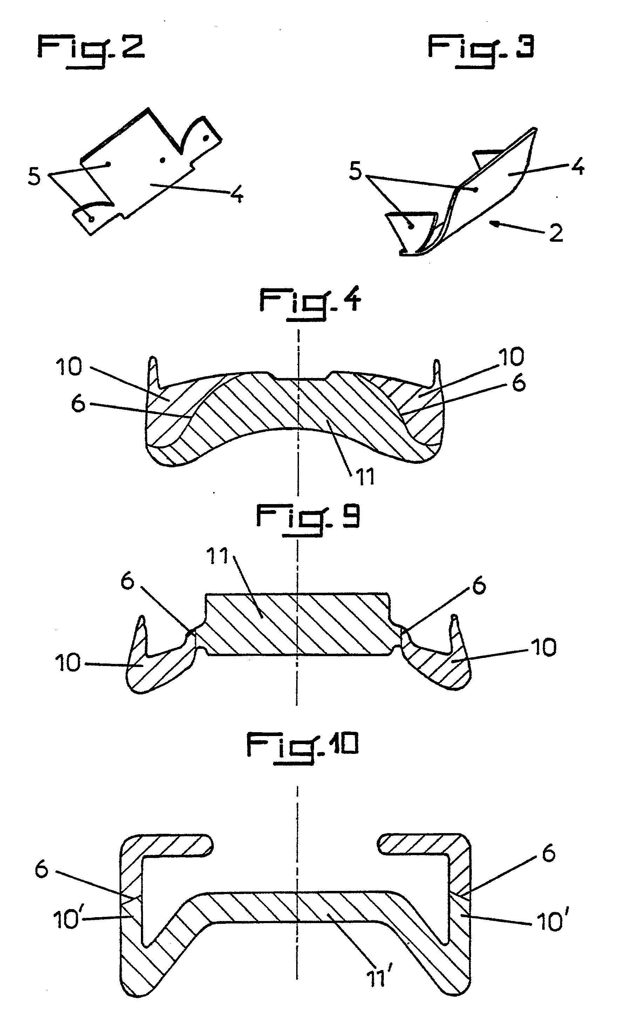

La figure 4 représente une vue en coupe d'une matelassure de siège telle qu'elle sort du moule. Les parties latérales 10 du coussin sont en mousse ferme, séparées de la partie centrale 11 du coussin en mousse souple par la couche 6 de matière fine et compacte faisant office d'agent qui solidarise les différentes mousses de polyuréthane.

On remarquera que, conformément à l'invention, la mousse souple, grâce à la disposition des récipients collecteurs 2 de séparation en mousse de polystyrène, recouvre les parties latérales 10 en mousse ferme, assurant ainsi un excellent confort d'approche.

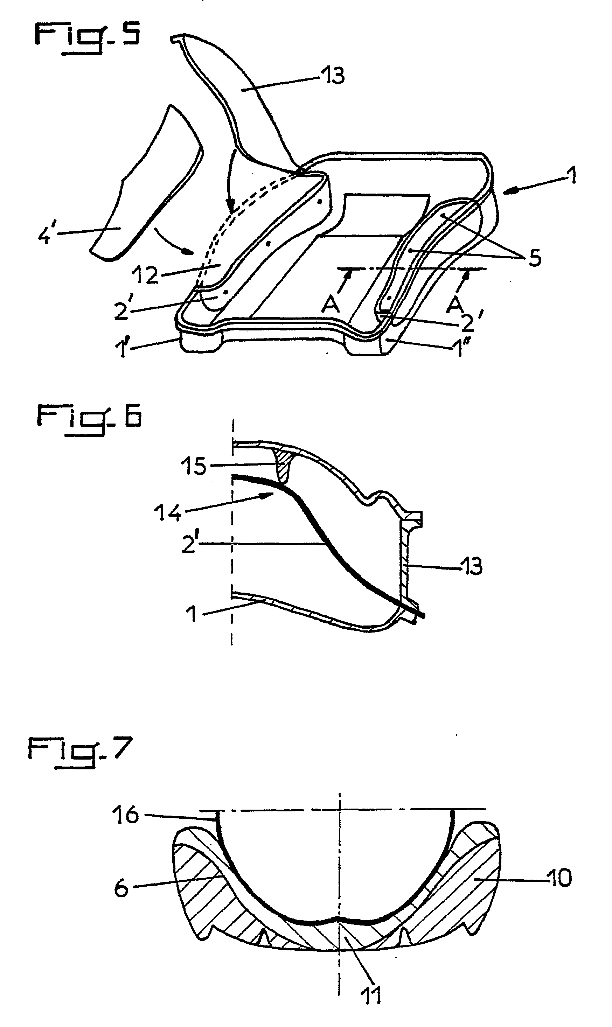

Comme le montrent les figures 5 et 6, il est possible de réaliser les récipients collecteurs 2' d'une manière économique en exploitant, conformément à l'invention, la flexibilité et la déformabilité résultant du surfaçage thermique des plaques en polystyrène expansé et permettant de réaliser lesdits récipients collecteurs 2' à partir desdites plaques.

Selon cette variante, une fois préalablement thermiquement surfacées, des plaques 4' en polystyrène expansé sont disposées et fixées à l'intérieur du moule 1, de manière à former les séparations 3 et/ou les récipients collecteurs 2', la forme de récipient collecteur 2' pouvant être obtenue, entre autres, en disposant les plaques 4' dans des ouvertures 12 dégagées par des parois articulées 13 du moule 1, la fermeture desdites parois 13 provoquant la fixation et le positionnement des plaques 4' qui épousent le profil inférieur des ouvertures 12, conférant à chaque plaque 4' sa forme de récipient collecteur 2'. Il est également possible de conférer à chaque récipient collecteur 2, 2' un contre-galbe conduisant à une forme anatomique des mousses de polyuréthane qui sont moulées dans le moule 1 grâce à un ergot 15 situé préférentiellement à l'intérieur du couvercle du moule 1 (figure 6).

La figure 7 démontre la structure anatomique d'un coussin ainsi obtenu accueillant un fessier 16.

Lorsqu'il est, au contraire, souhaité que les parties latérales 10 d'une matelassure soient en mousse ferme, sans confort d'approche, par exemple pour des sièges de voitures de sport, on compartimente le moule 1 au moyen de séparations 3 en polystyrène expansé façonnées aux dimensions désirées, et fixées par exemple par des clips 7'. On coule de même les différents mélanges moussants de mousse de polyuréthane, puis après avoir recouvert le moule 1 de son couvercle, on procède à la polymérisation comme décrit précédemment (figure 8).

La figure 9 représente une variante de réalisation d'une matelassure de siège telle qu'elle sort du moule 1, la mousse souple de la partie centrale 11 du coussin étant également séparée de la mousse ferme des parties latérales 10 du coussin par une couche 6 de matière fine et compacte faisant office d'agent qui solidarise les différentes mousses de polyuréthane.

La figure 10, quant à elle, représente une matelassure de dossier telle qu'elle sort de son moule, la mousse souple de polyuréthane constituant la partie centrale 11` et l'avant des parties latérales 10' du dossier, et la mousse ferme constituant l'arrière des parties latérales 10' du dossier, l'avant et l'arrière des parties latérales 10' étant séparées par une couche 6 de matière fine et compacte faisant office d'agent qui solidarise les différentes mousses de polyuréthane.

Cette variante de réalisation est obtenue en plaçant les récipients collecteurs en mousse de polystyrène en zone haute des parois latérales du moule. Ainsi la mousse souple coulée dans le fond du moule n'a pu s'expanser que jusqu'à la hauteur des récipients collecteurs en mousse de polystyrène, formant barrière, tandis que la mousse ferme coulée dans ces récipients collecteurs de mousse de polystyrène, s'est expansée dans la partie supérieure du moule.

Cette variante illustre le moulage de matelassures en mousse de polyuréthane dont deux zones de souplesses différentes sont superposées.

Il va de soi que les matelassures représentées figures 4, 9 et 10 ne sont que des exemples non limitatifs de matelassures en mousse de polyuréthane et que l'invention a pour objet toutes matelassures présentant deux ou plusieurs zones de souplesse, de géométrie parfaite, entièrement solidarisées, exemptes de toutes fentes indésirables, permettant toutes combinaisons répondant aux nécessités de soutien et de confort.

**Revendications**

1. Procédé de fabrication d'une matelassure moulée en mousse de polyuréthane présentant plusieurs zones juxtaposées et/ou superposées de souplesse différente, caractérisé en ce qu'il consiste à compartimenter un moule (1) en y disposant un ou plusieurs récipients collecteurs (2) et/ou une ou plusieurs séparations (3) en polystyrène expansé, à couler simultanément différents mélanges moussants de polyuréthane de souplesses différentes chacun dans l'un des volumes délimités par les parois des séparations (3) et du moule (1) et/ou par les parois des récipients collecteurs (2), à recouvrir le moule (1), à soumettre le moule (1) rempli des mousses de polyuréthane à la température provenant d'une source de chaleur extérieure et/ou de la réaction exothermique des mousses, afin d'obtenir non seulement la polymérisation des mousses de polyuréthane, mais, en outre, la rétraction du polystyrène expansé, cette rétraction à la température (T) déterminant la transformation dudit polystyrène expansé en une couche (6) de matière souple faisant office d'agent qui solidarise entre elles les mousses de polyuréthane de souplesses différentes qui avaient été coulées simultanément.

2. Procédé selon la revendication 1, caractérisé en ce que la transformation par rétraction du polystyrène expansé est obtenue en soumettant le moule (1) rempli de mousse de polyuréthane à la température (T) provenant d'une source de chaleur extérieure et/ou de la réaction exothermique des mousses, de façon à ce que le polystyrène expansé soit soumis à sa température de rétraction comprise entre 80°C et 130°C durant environ 120 à 180 secondes, préférentiellement à 100°C durant 150 secondes.

3. Procédé selon l'une quelconque des revendications 1 et 2, caractérisé en ce que les séparations (3) et/ou les récipients collecteurs (2) sont façonnés dans des plaques (4) en polystyrène expansé d'une densité de 8 à 20 g/dm³, préférentiellement 15 g/dm³, et d'une épaisseur de 1 à 4 mm, préférentiellement 2 mm, et dont la rétraction s'effectue à une température (T) comprise entre 70°C et 150°C, entraînant pendant la phase de polymérisation la transformation par rétraction dudit polystyrène expansé en une couche (6) de matière fine, compacte et souple faisant office d'agent qui solidarise entre elles les mousses de polyuréthane de souplesses différentes qui avaient été coulées simultanément.

4. Procédé selon l'une quelconque des revendications 1 à 3, caractérisé en ce que des orifices (5) de l'ordre de 0,5 à 2 mm sont réalisés dans les plaques (4) avant ou après leur façonnage, afin de favoriser la solidarisation des mousses par des points d'ancrage qui renforcent la cohésion desdites mousses.

5. Procédé de fabrication selon l'une quelconque des revendications 1 à 4, caractérisé en ce que les plaques en polystyrène expansé sont au préalable traitées par surfaçage thermique en les plaçant entre deux plaques métalliques lisses, ou deux rouleaux calandreurs, chauffés à une température (t) comprise entre 100°C et 140°C, préférentiellement 130°C, durant environ 0,60 à 1,80 secondes, préférentiellement 1,20 secondes, ce surfaçage thermique des plaques au contact des deux plaques ou rouleaux chauffants provoquant, d'une part, un lissage des surfaces supérieure et inférieure de chaque plaque en polystyrène expansé et, d'autre part, une rétraction partielle des billes de polystyrène expansé constitutives de chaque plaque, déterminant ainsi une réduction de la surface des points d'attache des billes entre elles et par là même, une multitude de petits trous là où par suite de la rétraction desdites billes, une désolidarisation partielle s'est opérée.

6. Procédé de fabrication selon la revendication 5, caractérisé en ce qu'une fois préalablement thermiquement surfacées, des plaques (4') en polystyrène expansé sont disposées et fixées à l'intérieur du moule (1), de manière à former les séparations (3) et/ou des récipients collecteurs (2'), la forme de récipient collecteur (2') pouvant être obtenue, entre autres, en disposant les plaques (4') dans des ouvertures (12) dégagées par des parois articulées (13) du moule (1), la fermeture desdites parois (13) provoquant la fixation et le positionnement des plaques (4') qui épousent le profil inférieur des ouvertures (12), conférant à chaque plaque (4') sa forme de récipient collecteur (2').

7. Procédé de fabrication selon l'une quelconque des revendications 5 et 6, caractérisé en ce qu'un contre-galbe (14) est conféré à chaque récipient collecteur (2, 2') conduisant à une forme anatomique des mousses de polyuréthane qui sont moulées dans le moule (1) grâce à un ergot (15) situé préférentiellement à l'intérieur du couvercle du moule (1).

## Claims

1. A method of producing moulded polyurethane foam upholstery comprising several juxtaposed and/or superimposed zones of different flexibility, characterised in that it involves dividing a mould (1) by arranging therein one or more receivers (2) and/or one or more separators (3) made of expanded polystyrene, simultaneously pouring different foaming mixtures of polyurethane each of different flexibility into one of the volumes defined by the walls of the separators (3) and of the mould (1) and/or by the walls of the receivers (2), covering the mould (1), subjecting the mould (1), filled with polyurethane foams, to the temperature originating from an external heat source and/or from the exothermic reaction of the foams, in order not only to polymerise the polyurethane foams but also to shrink the expanded polystyrene, this shrinkage at temperature (T) determining the transformation of said expanded polystyrene into a layer (6) of flexible material serving to interconnect the polyurethane foams of different flexibilities which had been poured simultaneously.

2. A method according to Claim 1, characterised in that the transformation by shrinkage of the expanded polystyrene is obtained by subjecting the mould (1) filled with polyurethane foam to the temperature (T) originating from an external heat source and/or from the exothermic reaction of the foams such that the expanded polystyrene is subjected to its shrinkage temperature of between 80°C and 130°C for about 120 to 180 seconds, preferably to 100°C for 150 seconds.

3. A method according to any one of Claims 1 and 2, characterised in that the separators (3) and/or the receivers (2) are shaped in sheets (4) of expanded polystyrene having a density of 8 to 20 g/dm³, preferably 15 g/dm³, and a thickness of 1 to 4 mm, preferably 2 mm, which shrink at a temperature (T) of between 70°C and 150°C causing, during the polymerisation phase, the transformation by shrinkage of said expanded polystyrene into a layer (6) of fine, compact and flexible material serving to connect the polyurethane foams of different flexibilities which had been poured simultaneously.

4. A method according to any one of Claims 1 to 3, characterised in that orifices (5) of the order of 0.5 to 2 mm are produced in the sheets (4) before or after the shaping thereof, in order to promote the connection of the foams by anchor points which increase the cohesion of said foams.

5. A method of production according to any one of Claims 1 to 4, characterised in that the expanded polystyrene sheets are previously treated by thermal surface improvement by placing them between two smooth metal plates or two calendering rollers heated to a temperature (t) of between 100°C and 140°C, preferably 130°C, for about 0.60 to 1.80 seconds, preferably 1.20 seconds, this thermal surface improvement of the sheets in contact with the two heating plates or rollers causing, on the one hand, smoothing of the upper and lower surface of each expanded polystyrene sheet and, on the other hand, partial shrinkage of the expanded polystyrene beads constituting each sheet, thus determining a reduction in the surface area of the points by which the beads are fixed to one another and, consequently, a plurality of small holes at the point where partial disconnection has occurred owing to the shrinkage of said beads.

6. A method of production according to Claim 5, characterised in that, once they have previously been subjected to thermal surface improvement, the sheets (4') of expanded polystyrene are arranged and fixed inside the mould (1) so as to form the separators (3) and/or the receivers (2'), whereby the shape of the receiver (2') can be achieved, among other methods, by arranging the sheets (4') in openings (12) cleared by the articulated walls (13) of the mould (1), closure of said walls (13) causing the fixing and positioning of the sheets (4') which match the lower profile of the openings (12), giving each sheet (4') its form as a receiver (2').

7. A method of production according to any one of Claims 5 and 6, characterised in that a counter-curve (14) is allocated to each receiver (2, 2'), giving the polyurethane foams moulded in the mould (1) an anatomical shape owing to a lug (15) preferably located inside the cover of the mould (1).

## Patentansprüche

1. Verfahren zur Herstellung von aus Polyurethanschaum geformten Polstern mit mehreren nebeneinander und/oder übereinander liegenden Zonen verschiedener Nachgiebigkeit, dadurch gekennzeichnet, daß es darin besteht, eine Form (1) zu unterteilen, indem darin ein oder mehrere Sammelbecken (2) und/oder eine oder mehrere Abtrennungen (3) aus expandiertem Polystyrol angeordnet werden, gleichzeitig mehrere Schaumgemische aus Polyurethan verschiedener Nachgiebigkeit jeweils in eines der durch die Wände der Abtrennungen (3) und der Form (1) und/oder durch die Wände der Sammelbecken (2) begrenzte Volumen hineinzugießen, die Form (1) zu bedecken, die mit Polyurethanschaum gefüllte Form (1) einer Temperatur auszusetzen, die von einer Wärmequelle und/oder von der exothermischen Reaktion des Schaums ausgeht, um nicht nur eine Polymerisierung des Polyurethanschaums, sondern außerdem die Retraktion des expandierten Polystyrols zu erreichen, wobei diese Retraktion bei der Temperatur (T) die Umwandlung des expandierten Polystyrols in eine Lage (6) nachgiebigen Materials herbeiführt, das als Mittel dient, welches den Polyurethanschaum von unterschiedlicher Nachgiebigkeit, der gleichzeitig gegossen wurde, fest miteinander verbindet.

2. Verfahren nach Anspruch 1, dadurch gekennzeichnet, daß die Umwandlung durch Retraktion des expandierten Polystyrols durch Aussetzen der mit Polyurethanschaum gefüllten Form (1) der von einer externen Wärmequelle und/oder der exothermischen Reaktion des Schaums ausgehenden Temperatur (T) erreicht wird, so daß dieser expandierte Polystyrol seiner Retraktionstemperatur zwischen 80°C und 130°C ungefähr 120 bis 180 Sekunden, vorzugsweise bei 100°C 150 Sekunden lang ausgesetzt ist.

3. Verfahren nach einem der Ansprüche 1 und 2, dadurch gekennzeichnet, daß die Abtrennungen (3) und/oder die Sammelbecken (2) in Platten (4) aus expandiertem Polystyrol mit einer Dichte von 8 bis 20 g/dm³, vorzugsweise von 15 g/dm³, und einer Dicke von 1 bis 4 mm, vorzugsweise 2 mm eingearbeitet sind, und deren Retraktion bei einer Temperatur (T) zwischen 70°C und 150°C erfolgt, was während der Polymerisierungsphase die Umwandlung durch Retraktion des expandiertem Polystyrol in eine Schicht (6) aus feinem, kompaktem und nachgiebigem Material bewirkt, das als Mittel dient, welches den Polyurethanschaum verschiedener Nachgiebigkeit, der gleichzeitig gegossen wurde, fest miteinander verbindet.

4. Verfahren nach einem der Ansprüche 1 bis 3, dadurch gekennzeichnet, daß die Öffnungen (5) von 0,5 bis 2 mm Größe in den Platten vor oder nach ihrer Formung ausgeführt werden, um die Verfestigung des Schaums durch Verankerungspunkte, welche die Kohäsion des Schaums verstärken, zu begünstigen.

5. Herstellungsverfahren nach einem der Ansprüche 1 bis 4, dadurch gekennzeichnet, daß die Platten aus expandiertem Polystyrol vorher einer thermischen Oberflächenbehandlung unterzogen werden, indem sie zwischen zwei auf eine Temperatur (t) zwischen 100°C und 140°C, vorzugsweise auf 130°C etwa 0,60 bis 1,80, vorzugsweise 1,20 Sekunden lang erhitzte, glatte Metallplatten oder Kalanderwalzen gelegt werden, wobei die thermische Oberflächenbehandlung der Platten in Kontakt mit den beiden Heizplatten oder Heizwalzen einerseits eine Glättung der Ober- und Unterseite jeder Platte aus expandiertem Polystyrol und andererseits eine teilweise Retraktion der expandierten Polystyrolkügelchen, aus der jede Platte besteht, bewirkt, wodurch auf diese Weise eine Reduzierung der Oberfläche der Anschlußpunkte der Kügelchen untereinander und dadurch dort eine Vielzahl kleiner Löcher herbeigeführt wird, wo aufgrund der Retraktion der Kügelchen eine teilweise Trennung erfolgt ist.

6. Herstellungsverfahren nach Anspruch 5, dadurch gekennzeichnet, daß nach vorheriger thermischer Oberflächenbehandlung, Platten (4') aus expandiertem Polystyrol an der Innenwand der Form (1) so angeordnet und befestigt werden, daß sie die Abtrennungen (3) und/oder Sammelbecken (2') bilden, wobei die Form eines Sammelbeckens (2') unter anderem durch Anordnung der Platten (4') in Öffnungen (12), die durch gelenkige Wände (13) der Form (1) ausgespart werden, erreicht wird, wobei die Schließung der Wände (13) die Befestigung und die Positionierung der Platten (4') bewirkt, welche an dem unteren Profil der Öffnungen (12) anliegen, wobei sie jeder Platte (4') die Form eines Sammelbeckens (2') geben.

7. Herstellungsverfahren nach einem der Ansprüche 5 und 6, dadurch gekennzeichnet, daß jedes Sammelbecken (2, 2') eine Gegenkontur (14) erhält, was zu einer anatomischen Form des Polyurethanschaums führt, der in der Form (1) mittels einer vorzugsweise an der Innenseite des Deckels der Form (1) sitzenden Nocke (15) abgeformt wird.

Fig.1

Fig.8

Fig.2

Fig.3

Fig.4

Fig.9

Fig.10

Fig. 5

Fig. 6

Fig. 7